# EUROPÄISCHE PATENTANMELDUNG

(11) **EP 1 988 296 A1**
(43) Veröffentlichungstag der Anmeldung: **05.11.2008**
(21) Anmeldenummer: 07008908.1
(22) Anmeldetag: 02.05.2007
(51) Int. Cl.: F15B 15/22, F16K 31/00

(54) **Variationen der Ventilschliessgeschwindigkeit durch Verwendung von unterschiedlichen Blenden**

(71) Anmelder: SIEMENS AKTIENGESELLSCHAFT, 80333 München (DE)
(72) Erfinder: Musch, Günter, 45481 Mülheim (DE); Zimmer, Gerta, Dr., 45468 Mülheim an der Ruhr (DE)

(57) **Zusammenfassung**

Die Erfindung betrifft ein Schnellschlussventil (21), das einen in einem Gehäuseoberteil (22) angeordneten Ventilantrieb (23) aufweist, wobei in dem Gehäuseoberteil (22) eine Öffnung bzw. Blende (24), die in einem Rückschlagventil integriert sein kann, für ein Steuermedium eingebracht ist, wobei der Ventilantrieb (23) ein Verschlusselement (26) aufweist, und wobei in dem Gehäuseoberteil (22) eine in Hochrichtung zur Öffnung bzw. zur Blende(24) gesehen beabstandete Blende (28, 32) angeordnet ist.

Um Spaltströmungen zu vermeiden weist das Gehäuseoberteil (22) in seinem Inneren eine zumindest im Bereich von zumindest einer Folge von zwei in Hochrichtung gesehen zur Öffnung bzw. zur Blende (24) beabstandeten Blenden (28, 32; 29, 31; 32, 34) parallel zu seiner Mittelachse (X) geradlinig verlaufende Führungsfläche (36) für das Verschlusselement (26) mit einer entsprechend geradlinig verlaufenden Schließfläche (46) auf.

## Beschreibung

Die Erfindung betrifft ein Schnellschlussventil, das einen in einem Gehäuseoberteil angeordneten Ventilantrieb aufweist, wobei in dem Gehäuseoberteil zumindest eine Öffnung bzw. Blende, die in einem Rückschlagventil integriert sein kann, für ein Steuermedium eingebracht ist, wobei der Ventilantrieb ein Verschlusselement aufweist, und wobei in dem Gehäuseoberteil eine in Hochrichtung zur Öffnung gesehen beabstandete Blende eingebracht ist.

Derartige Schnellschlussventile sind bekannt und werden beispielsweise bei Strömungsmaschinen z.B. Dampfturbinen zum schnellen Schließen von an die Strömungsmaschine angeschlossenen Rohrleitungen oder dergleichen Leitungen eingesetzt.

Ein Schließen der Schnellschlussventile mit konstanter Schließgeschwindigkeit erzeugt einen nicht linearen Abfall beispielsweise des Dampfmassenstromes welcher unter Umständen zu großen Druckstoßbelastungen in der angeschlossenen Rohrleitung führen kann. Dieses Problem tritt beispielsweise bei Dampfturbinen mit z.B. vier separaten Ventilsträngen auf. Durch Ausfall eines Regelventils in Schließrichtung kann es dazu kommen, dass drei Ventile ordnungsgemäß abgesperrt werden, wohingegen das vierte Ventil offen bleibt. Daraus resultiert ein wesentlich höherer Dampfmassenstrom durch das verbleibende Ventil und damit, bei Absperrung durch das entsprechende Schnellschlussventil, ein wesentlich höherer Druckstoß in der Dampfleitung.

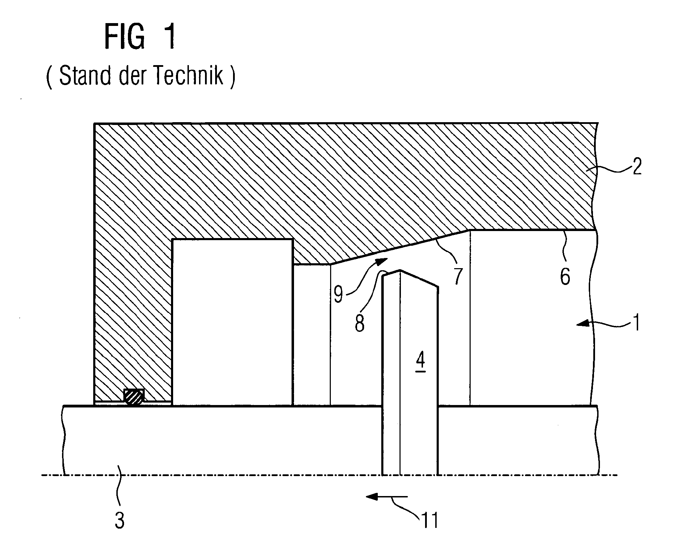

Um dies zu vermeiden ist es bekannt, ein Schnellschlussventil zu verwenden, bei welchen die Schließgeschwindigkeit des Ventilantriebs durch Verwendung spezieller Spalte in dem Gehäuseoberteil sukzessive verlangsamt wird. Ein bekanntes Schnellschlussventil ist beispielhaft in Figur 1 dargestellt. Figur 1 zeigt ein Schnellschlussventil 1 in einem Teilquerschnitt durch ein Gehäuseoberteil 2. In dem Gehäuseoberteil 2 ist eine Ventilstange 3 geführt, die ein Verschlusselement 4 trägt. Das Verschlusselement 4 kann auch als Kolben bezeichnet werden. Nicht dargestellt in Figur 1 ist eine Öffnung, die in dem Gehäuseoberteil 2 eingebracht ist. Durch die Öffnung kann ein Steuermedium beispielsweise Hydrauliköl in das Gehäuseoberteil 2 strömen. Aufgrund des entstehenden Überdrucks wird das Verschlusselement 4 in Richtung zum Gehäusekopf bewegt. Das Verschlusselement 4 nimmt dabei die Ventilstange 3 mit. Die Ventilstange 3 ragt in ein Federgehäuse, und trägt zumindest einen Kraftspeicher, beispielsweise eine Spiralfeder, die entsprechend der Bewegung der Ventilstange 3 gespannt wird. Das Schnellschlussventil 1 ist bei gespanntem Kraftspeicher geöffnet.

Zum Schließen des Schnellschlussventils 1 wird der Überdruck durch Ableiten des Steuermediums abgebaut, so dass sich der Kraftspeicher entspannt.

An der Gehäuseinnenwand 6 des Gehäuseoberteils 2 ist eine im Querschnitt gesehen angeordnete Schräge 7 angeordnet, so dass sich das Gehäuseoberteil 2 in diesem Innenwandbereich konusartig von dem Gehäusekopf in Richtung zum Federgehäuse verjüngt. Das Verschlusselement 4 weist an seinem Außenumfang eine zur Schräge 7 korrespondierende Schräge 8 auf. Das in Figur 1 dargestellte Beispiel ergibt für Niederdruckhydraulik (z.B. 8 bar) eine Blendenströmung. Bei der Entspannung des Kraftspeichers wird so ein sich stetig verkleinernder Spalt 9 geschaffen, durch welchen das Steuermedium fließen kann. Im Niederdruckbereich wird mit dieser Konfiguration eine Blendenströmung realisiert. Durch den in Schließrichtung 11 stetig kleiner werdenden Spalt 9 verlangsamt sich die Schließgeschwindigkeit des Schnellschlussventils 1. Diese Ausführung nach Figur 1 kann nachteiliger Weise nur im Niederdruckbereich (z.B. 8 bar) eingesetzt werden. Für Hochdruckhydraulik (z.B. 160 bar) wären, bei gleicher Konstruktion, sehr kleine Strömungsquerschnitte erforderlich, so dass damit eine Blendenströmung nicht mehr zu realisieren wäre.

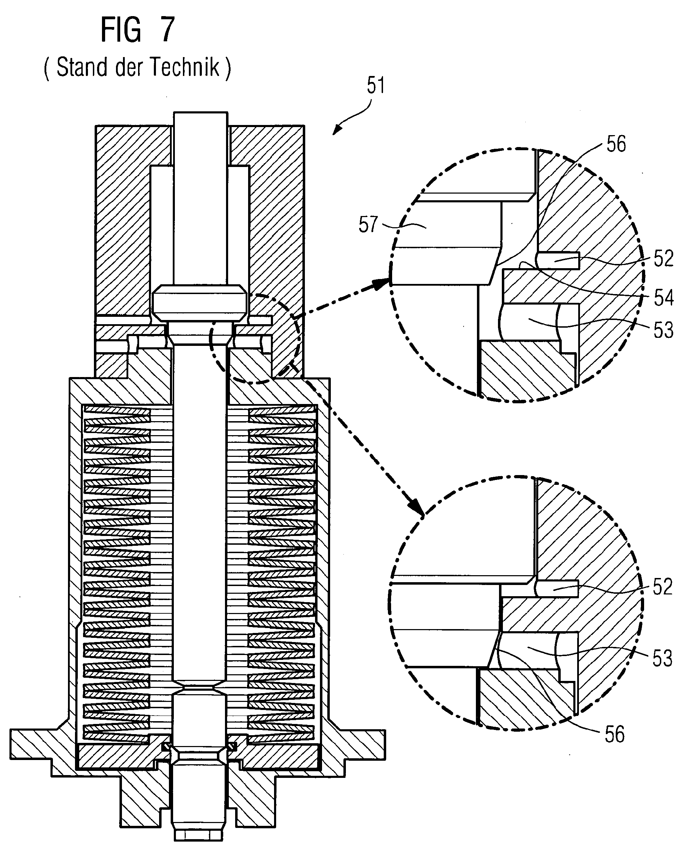

Figur 7 zeigt ein weiteres, bekanntes Schnellschlussventil 51 mit einer Kombination der Spaltströmung mit einer Blendenströmung. Hierzu ist zwischen einer Öffnung 52 (Blende) und einer in Hochrichtung dazu beabstandeten Blende 53 eine Stufe 54 in der Gehäuseinnenwand angeordnet, die mit einer entsprechenden Schräge 56 an dem Verschlusselement 57 zusammenwirkt, so dass sich eben die nachteilige Spaltströmung ergibt. Das Verschlusselement 57 ist angepasst an die Stufe 54 der Gehäuseinnenwand ebenfalls stufenartig ausgeführt.

Die Ausgestaltung gemäß Figur 1 ergibt, wie bereits beschrieben, für eine Niederdruckhydraulik (z.B. bis 8 bar) eine Blendenströmung. Je höher der Druck in der Hydraulikflüssigkeit ist, und damit die Abmessungen kleiner werden müssen, umso mehr geht die Blendenströmung in eine Spaltströmung über. Um dies weitgehend zu verhindern wurde die Ausgestaltung nach Figur 7 entwickelt. Die Konstruktion nach Figur 7 stellt den in Hochdruckhydraulik ausgeführten Ventilantrieb dar. Hier ist eine Blendenkombination gewählt worden, um eine Endlagendämpfung zu realisieren. Hier erfolgt der Auslass des Hydrauliköls durch zwei Blenden 52, 53. Kurz vor Auftreffen des Antriebs wird der Durchfluss zu der in der Zeichnungsebene unteren (größeren) Blende 53 durch einen Konus (Schräge 56) verschlossen. In dem Bereich, in dem der Konus (Schräge 56) an der Nase (Stufe 54) vorbeifährt, ergibt sich eine Spaltströmung zwischen Nase (Stufe 54) und Konus (Schräge 56). Beim Schließvorgang ergeben sich zwei unterschiedliche Blendenströmungen, zum Einen im oberen Bereich des Hubes, wo zwei Blenden 52,53 zur Verfügung stehen, zum Anderen im unteren Bereich des Hubes, in dem dann nur noch eine Blende 52 mit kleinerem Durchmesser zur Verfügung steht. In diesem Bereich wird die reine Blendenströmung durch eine Spaltströmung durch den Spalt zwischen der Stufe 54 und der Schräge 56 überlagert.

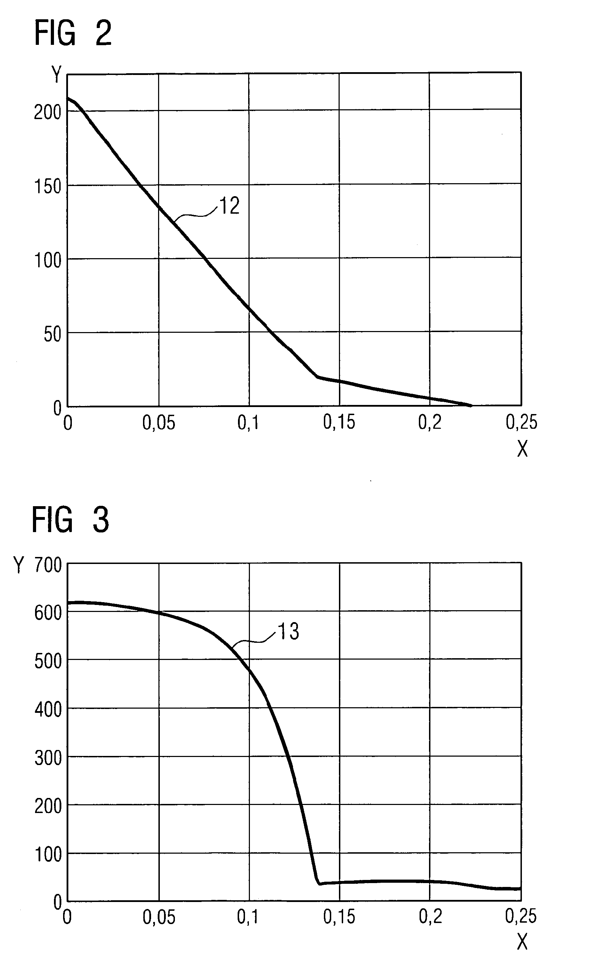

Figur 2 zeigt eine sich linear erstreckende Schließkurve 12 wobei der Hub (Y-Achse) des Verschlusselementes über der Zeit (X-Achse) aufgetragen ist, wobei sich Figur 2 auf einen Antrieb für Hochdruckhydraulik (z.B. 160 bar) bezieht. Weiter zeigt Figur 3 den Verlauf des Massenstromes 13 während des Schließvorgangs des Schnellschlussventils.

Als ein Hauptnachteil der bekannten Schnellschlussventile ist anzusehen, dass bei linearem Schließen des Antriebs ein konvexer Verlauf der Massenstromkurve resultiert. Um die Massenstromkurve zu linearisieren, muss die Ventilschließgeschwindigkeit sukzessive reduziert werden. Dies ist im Niederdruckbereich (Figur 1) möglich, indem die Kontur (Gehäuseinnenwand 6, Schräge 7), an der die "Nase" entlangfährt, entsprechend angepasst wird. Aufgrund der Nasengeometrie liegt immer eine Blendenströmung vor. Im Bereich der Hochdruckhydraulik kann die Konstruktion aufgrund von Fertigungstoleranzen nicht mehr realisiert werden, so dass daher die Konstruktion gemäß Figur 7 verwendet wird.

Weiter ist nachteilig, dass die Komponenten mit äußerster Genauigkeit ausgeführt werden müssen, die quasi nicht realisierbar ist. Bereits geringe Fertigungstoleranzen bewirken große Änderungen in Bezug auf die Strömungsgeschwindigkeit des Steuermediums bzw. des Hydrauliköls, und damit auf die Schließgeschwindigkeit des Schnellschlussventils. Insbesondere das Hydrauliköl verändert temperaturbedingt seine Viskosität. Verändert sich aber die Viskosität des Hydrauliköls hat dies auch unmittelbar Einfluss auf dessen Fließgeschwindigkeit und somit auch auf die Schließgeschwindigkeit. Die Spaltströmung ist nachteiliger Weise temperaturabhängig, was dazu führt, dass die Schließgeschwindigkeit bei kaltem und warmem Öl unterschiedlich ist.

Der Erfindung liegt daher die Aufgabe zugrunde, ein mit Hochdruckhydraulik betriebenes Schnellschlussventil mit einfachen Mitteln dahingehend zu verbessern, dass zur Entlastung der Dampfleitung die Schließcharakteristik des Antriebs verändert wird, wobei die Schließgeschwindigkeit des Schnellschlussventils unabhängig von der Temperatur des Steuermediums bzw. des Hydrauliköls und Kolbenspielen bzw. Verschlusselementspielen ist.

Erfindungsgemäß wird die Aufgabe dadurch gelöst, dass das Gehäuseoberteil in seinem Inneren eine zumindest im Bereich von zumindest einer Folge von zwei in Hochrichtung zur Öffnung gesehen beabstandeten Blenden parallel zu seiner Mittelachse geradlinig verlaufende Führungsfläche für das Verschlusselement mit einer entsprechend geradlinig verlaufenden Schließfläche aufweist.

Der Erfindung liegt die Erkenntnis zugrunde, dass sich aufgrund neuer Kraftwerksplanungen die Notwendigkeit ergibt, Ventile mit Hochdruckhydraulikantrieb einzusetzen und die Massenstromcharakteristik dahingehend anzupassen, dass die resultierende Charakteristik eine möglichst flache Tangente hat; d.h., die Anforderung ist, die in Figur 3 dargestellte Charakteristik dahingehend zu modifizieren, dass ein möglichst linearer Verlauf des Dampfdurchsatzes realisiert werden kann. Die Konstruktion gemäß Figur 1 ermöglicht eine Anpassung der Ventilschließgeschwindigkeit zur Beeinflussung des Charakteristik des abzusperrenden Dampfmassenstromes im Bereich der Niederdruckhydraulik. Dies ist aber auf die Anwendung in der Hochdruckhydraulik nicht umzusetzen. Der bislang im Bereich der Hochdruckhydraulik eingesetzte Antrieb (Figur 7) hat eine weitgehend lineare Schließcharakteristik, was zu einer konvexen Massenstromcharakteristik führt. Lediglich im Bereich vor dem unmittelbaren Aufsetzen des Kegels auf den Sitz wurde eine Endlagendämpfung vorgesehen. Im relevanten Bereich beeinflusst diese die Massenstromcharakteristik nicht. Die Realisierung der Endlagendämpfung ist darüber hinaus keine reine Blendenströmung.

Im Hochdruckhydraulikbereich (z.B. 160 bar) ergeben sich bei einer Spaltströmung bereits aus geringen Fertigungstoleranzen der zusammenwirkenden Komponenten große Änderungen in Bezug auf die Strömungs- bzw. Fließgeschwindigkeit des Hydrauliköls und damit auf die Schließgeschwindigkeit des Schnellschlussventils. Auch der Einfluss der Temperaturabhängigkeit führt zu erheblichen Schwankungen in der Ausflussgeschwindigkeit (bis zu 100% Unterschied bei kaltem und warmem Hydrauliköl). Im Gegensatz zur Spaltströmung ist die Strömung durch eine Blende (Blendenströmung) nur vom Druck des Hydrauliköls abhängig. Die Viskosität des Hydrauliköls spielt bei der Blendenströmung keine Rolle. Damit wird auch der Temperatureinfluss weitgehend eliminiert, so dass die Schließgeschwindigkeit aufgrund der Blendenströmung bei kaltem und warmem Hydrauliköl annähernd gleich ist. Aufgrund des vorteilhaften Vermeidens der Spaltströmung ist der Herstellungsaufwand des erfindungsgemäßen Schnellschlussventils auch erheblich vereinfacht, da die ursprünglich zusammenwirkenden Schrägen und/oder Stufen an Gehäuseinnenwand und Verschlusselement entfallen. Vielmehr können die Gehäuseinnenwand bzw. die Führungsfläche und die Schließfläche des Verschlusselementes einfachst mit einem gleich bleibenden Innendurchmesser ausgeführt werden. Die Blenden sind bevorzugt durchgängig in die Gehäusewand eingebracht und außenseitig mit einem Mediumrückführsystem bzw. dem Hydrauliksystem verbunden, welches bei Schließen des Schnellschlussventils mit geeigneten Reaktionsmitteln auf Rücklauf gestellt wird.

Günstig im Sinne der Erfindung ist, wenn die zumindest zwei Blenden im Längsschnitt gesehen jeweils diametral gegenüberliegend zu der Mittelachse angeordnet sind. Zweckmäßiger Weise sind im Längsschnitt gesehen dabei jeweils zumindest zwei Blenden an jeder Seite, in Hochrichtung gesehen zueinander jeweils beabstandet, des Gehäuseoberteils angeordnet. Vorteilhaft ist vorgesehen dass die sich jeweils diametral gegenüberliegenden Blenden zumindest mit ihren Mündungsöffnungen symmetrisch angeordnet sind.

In bevorzugter Ausgestaltung weist das Gehäuseoberteil bezogen auf seine Mittelachse im Längsschnitt gesehen beidseitig jeweils drei Blenden bzw. Blendenpaare auf, die in Hochrichtung gesehen jeweils übereinander angeordnet sind. Natürlich können die zumindest zwei Blenden in dem Gehäuseoberteil auch in einem Kreiswinkel von weniger als 180° angeordnet sein. Bevorzugter Weise sind zumindest die Mündungsöffnungen der jeweiligen in Hochrichtung aufeinander folgenden Blenden jeweils auf derselben Höhe angeordnet. Selbstverständlich können auch mehr als zwei oder drei Blenden in Hochrichtung zueinander beabstandet vorgesehen sein.

Günstigerweise wird mittels der Erfindung das Prinzip der umlaufenden Nut mit einer Blende im Ölablauf aufgegeben. Vielmehr verbinden je zwei gegenüberliegende Bohrungen den Innenraum mit dem Ölrücklauf. In diesen Bohrungen sind die eigentlichen Blenden eingebracht, vorzugsweise eingeschraubt. Dadurch können diese vergleichsweise einfach modifiziert werden. Ein weiterer Vorteil liegt darin, dass die Spaltströmung nicht mehr von einer umlaufenden Nut zur nächsten erfolgt. Es sind jetzt nur noch Spaltströmungen in Bezug auf die Bohrungen relevant. Die fallen aber aufgrund des wesentlich kleineren Querschnitts fast nicht mehr ins Gewicht.

Das Verschlusselement ist mit einer Ventilstange verbunden, welche kopfseitig aus dem Gehäuseoberteil heraussteht und fußseitig in ein sich an das Gehäuseoberteil anschließendes Federgehäuseteil führt. Fußseitig weist die Ventilstange ein Tragelement für zumindest einen Kraftspeicher, z.B. für eine Tellerfeder auf, welche sich gegenüberliegend zum Tragelement kopfseitig an dem Federgehäuseteil abstützt.

In zweckmäßiger Ausgestaltung ist das Verschlusselement als kopfseitig und fußseitig geschlossener Zylinder ausgeführt, der mit seiner Zylinderwand bzw. seiner Schließfläche an den Innendurchmesser der Führungsfläche angepasst ist, bzw. mit kleinem Spiel an dieser anliegt, wobei die Führungsfläche bevorzugt mittels einer Dichtvorrichtung bzw. Dichtung abgedichtet ist, um eine Spaltströmung zu vermeiden. Das Verschlusselement kann als Vollzylinder oder als Hohlzylinder ausgeführt sein. Natürlich ist es möglich, das Verschlusselement auch kolbenartig mit einem Kolbenboden und einem Kolbenhemd auszuführen, wobei der Kolbenboden entweder zur Fußseite oder zur Kopfseite der Ventilstange orientiert angeordnet sein kann. Das Kolbenhemd wäre dann entsprechend mit seinem freien Ende entweder zur Kopfseite oder zur Fußseite der Ventilstange orientiert an dem Kolbenboden angeordnet. Das Kolbenhemd ist mit seinem Durchmesser an den Innendurchmesser der Führungsfläche angepasst bzw. liegt mit seiner Schließfläche mit kleinem Spiel an dieser an. In Bevorzugter Ausgestaltung ist das Kolbenhemd als in Umfangsrichtung durchgehender Zylindermantel ausgeführt. Selbstverständlich kann das Kolbenhemd in Umfangsrichtung aber auch unterbrochen sein, so dass jeweils Kolbenhemdstege korrespondierend an die Lage der Mündungsöffnungen der Blenden bzw. Blendenpaare angeordnet sind, und diese abdecken können. Natürlich kann auch die Zylinderwand des Verschlusselementes in der Ausgestaltung als Zylinder in Umfangsrichtung entsprechend unterbrochen sein.

Bei der Schließbewegung des Schnellschlussventils strömt das Hydrauliköl aufgrund des erfindungsgemäßen Ventilantriebes durch die in Hochrichtung zueinander beabstandete Folge der zumindest zwei Blenden, von denen eine nach der anderen durch das sich schließende Verschlusselement verdeckt und somit geschlossen wird. Der Ventilantrieb wird somit vorteilhaft durch sukzessives Absperren der übereinander angeordneten Blenden abgebremst. Vorteilhaft wird somit eine abgestufte Absperrung durch die in Hochrichtung zueinander beabstandeten und sich nachfolgend schließenden Blenden zur Verfügung gestellt, wodurch sich die Schließzeit insbesondere im unteren Hubbereich des Verschlusselementes verlängert. Bei geschlossenem Ventil weist der Hub einen Betrag von Null auf, so dass sich das Verschlusselement bei dem Schließen von seinem oberen Hubbereich in Richtung zum unteren Hubbereich bewegt. Damit nimmt der Hub bei dem Schließen stetig ab bzw. der Hub wird kleiner. Durch das Schließen bzw. Abdecken der bezogen auf die Kopfseite des Gehäuseoberteils ersten Blende verringert sich der effektiv vorhandene Strömungsquerschnitt, was sich unmittelbar auf die Ausströmgeschwindigkeit des Hydrauliköls und damit auf die Schließgeschwindigkeit des Schnellschlussventils auswirkt. Beide Geschwindigkeiten werden geringer. Die sukzessive Reduktion der Schließgeschwindigkeit des Ventils bewirkt eine Verlangsamung der Reduktion des Dampfmassenstromes durch das Schnellschlussventil (kleinerer Maximal-Gradient in der Dampf-Massenstromkurve) und damit eine Reduktion des resultierenden Druckstoßes in der Dampfleitung.

Vorteilhaft ist, dass je nach dem wie viel Blenden übereinander angeordnet sind, die Schließgeschwindigkeit der Schnellschlussventile variiert werden kann. Je mehr Blenden übereinander angeordnet sind bzw. nacheinander geschlossen bzw. verdeckt werden, desto länger kann die Schließgeschwindigkeit des Ventils und damit die Charakteristik des Dampfmassenstromes beeinflusst werden. Durch die Anordnung von mehreren übereinander angeordneten Blenden bzw. Blendenpaaren kann die Charakteristik (Kontur) des Dampfmassenstromes beeinflusst werden. Eine lineare Abnahme des Ventilhubs bewirkt eine konvexe Dampf-Massenstromkurve (siehe Stand der Technik Figuren 2 und 3). Mit der Erfindung jedoch wird mittels mehrerer Blenden bzw. mehrerer Blendenpaare eine konkave Schließkurve für den Ventilhub generiert. Dies sollte idealer Weise eine lineare Abnahme des Dampf-Massenstromes bewirken, was jedoch im oberen Schließbereich bzw. im oberen Hubbereich natürlich aus geometrischen Gründen nicht zu realisieren ist. Im unteren Schließbereich bzw. im unteren Hubbereich jedoch, der aufgrund der großen Gradienten ohnehin der kritische Bereich ist, wirkt sich das erfindungsgemäß ausgeführte Schnellschlussventil vorteilhaft aus, was bedeutet, dass eine lineare Abnahme des Dampf-Massenstromes bewirkt wird.

Weitere vorteilhafte Ausgestaltungen der Erfindung sind in den Unteransprüchen und der folgenden Figurenbeschreibung offenbart.

### Es zeigen

- Fig.4: einen Längsschnitt durch ein Schnellschlussventil,
- Fig.5: einen Verlauf der Schließgeschwindigkeit des Schnellschlussventils aus Figur 4, und
- Fig.6: einen Verlauf eines Dampfmassenstromes bei der Schließbewegung des Schnellschlussventils aus Figur 4.

In den unterschiedlichen Figuren sind gleiche Teile stets mit denselben Bezugszeichen versehen, weswegen diese in der Regel auch nur einmal beschrieben werden.

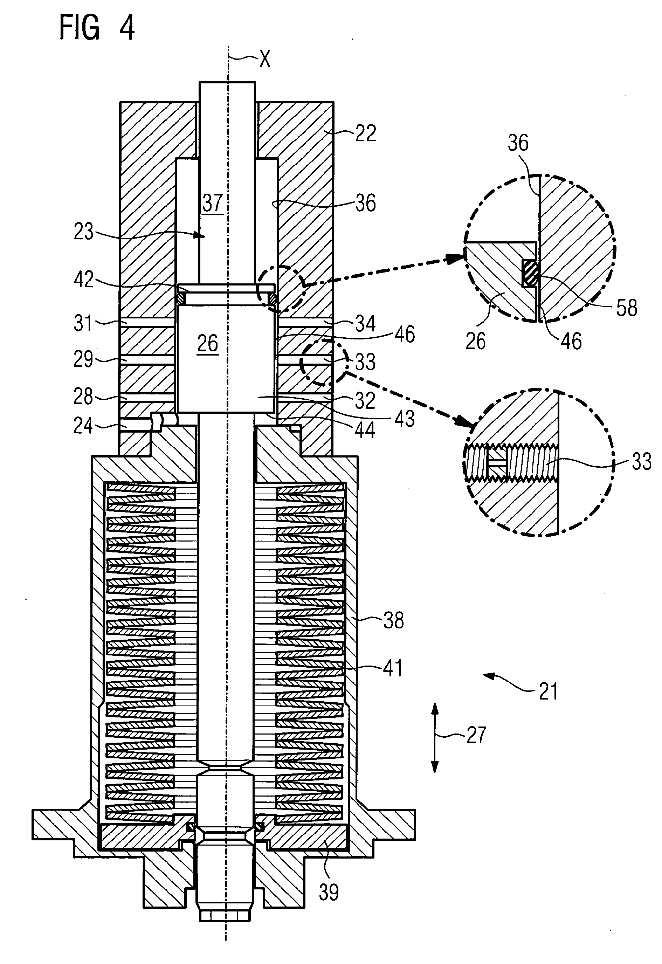

Figur 4 zeigt ein Schnellschlussventil 21 beispielsweise für eine Dampfturbine, das einen in einem Gehäuseoberteil 22 angeordneten Ventilantrieb 23 aufweist. In dem Gehäuseoberteil 22 ist zumindest eine Öffnung (Blende) 24 für ein Steuermedium angeordnet. Das Steuermedium ist bevorzugt Hydrauliköl. Der Ventilantrieb 23 weist ein Verschlusselement 26 auf.

Das Gehäuseoberteil 22 weist in Hochrichtung (Doppelpfeil 27) gesehen eine Folge von drei übereinander eingebrachten Blendenpaaren 28, 29, 31, und 32, 33, 34 sowie die Blende 24 auf. Die aufeinander folgenden Blenden 28, 29, 31, und 32, 33, 34 sind bezogen auf eine Mittelachse X des Schnellschlussventils 21 jeweils diametral gegenüberliegend, also symmetrisch zueinander angeordnet. Das bedeutet, dass die in Hochrichtung 27, von der Blende 24 aus gesehen, unterste Blende 28 auf der linken Zeichnungsebene und die dazu diametral gegenüberliegende Blende 32 auf der rechten Zeichnungsebene von Figur 4 angeordnet ist. Die beiden Blenden 28 und 32 sind also in Umfangsrichtung des Gehäuseoberteils 22 symmetrisch zueinander angeordnet, und bilden ein Blendenpaar. Bei den in Hochrichtung folgenden Blenden bzw. Blendenpaaren 29 und 33 bzw. 31 und 34 gilt das gleiche. Die Blende 24 ist nur einmal vorhanden.

Die Blenden 28, 29, 31, und 32, 33, 34 , in welche die Blendenbauteile eingebracht, vorzugsweise eingeschraubt werden, sind durchgehend in dem Gehäuseoberteil 22 eingebracht, und münden innenseitig in das Inneren des Gehäuseoberteils 22. Außenseitig sind die Blenden 28, 29, 31, und 32, 33, 34 mit einem Hydrauliksystem verbunden. Die Blenden 28, 29, 31, und 32, 33, 34 sind vorzugsweise senkrecht zur Mittelachse X verlaufend angeordnet.

Das Gehäuseoberteil 22 weist eine zylindrische Innenwand 36 auf, die auch als Führungsfläche 36 für das Verschlusselement 26 bezeichnet werden kann. Die Führungsfläche 36 verläuft in dem dargestellten Ausführungsbeispiel durchgehend parallel bzw. geradlinig zur Mittelachse X.

Das Verschlusselement 26 ist mit einer Ventilstange 37 verbunden, die kopfseitig aus dem Gehäuseoberteil 22 heraussteht und fußseitig in ein Federgehäuseteil 38 geführt ist. Fußseitig weist die Ventilstange 37 ein Tragelement 39 für zumindest einen Kraftspeicher 41 auf, wobei der Kraftspeicher 41 beispielhaft als Tellerfeder ausgeführt ist, die fußseitig auf dem Tragelement 39 aufliegt und sich kopfseitig an dem Federgehäuseteil 38 abstützt.

Das Verschlusselement 26 ist beispielhaft kolbenartig mit einem Kolbenboden 42 und einem Kolbenhemd 43 ausgeführt. Der Kolbenboden 42 ist zur Kopfseite der Ventilstange 37 orientiert angeordnet, wobei das Kolbenhemd 43 mit seinem freien Ende 44 in Richtung zur Fußseite der Ventilstange 37 orientiert ist. In bevorzugter Ausgestaltung weist das Verschlusselement 26 einen Außendurchmesser auf, der an den Innendurchmesser der Führungsfläche 36 angepasst ist, so dass das Kolbenhemd 43 bzw. der entsprechende Abschnitt des Kolbenbodens 42, also die Schließfläche 46, mit kleinem Spiel an der Führungsfläche 36 anliegt. Das Verschlusselement 26 bzw. der Kolbenboden 42 weist eine Dichtvorrichtung bzw. Dichtung 58 auf, die eine Abdichtung zur Führungsfläche 36 bewirkt.

Die Öffnung 24 ist eine Bohrung, in die eine Blende integriert ist. Diese Blende kann in ein Rückschlagventil integriert sein. In dem dargestellten Ausführungsbeispiel ist das Schnellschlussventil 21 geschlossen. Alle Blenden 28, 29, 31, und 32, 33, 34 sind durch die Schließfläche 46 des Verschlusselementes 26 abgedeckt bzw. verschlossen. Zum Öffnen des Schnellschlussventils 21 wird das Steuermedium bzw. das Hydrauliköl durch die Blende 24 bzw. durch das in dem Zulauf angeordnete Rückschlagventil, in dem die Blende 24 integriert sein kann, in das Innere des Gehäuseoberteils 22 geleitet. Aufgrund des entstehenden Überdrucks in dem Gehäuseoberteil 22 hebt sich das Verschlusselement 26 in Richtung zur Kopfseite an, wodurch gleichzeitig das Tragelement 39 angehoben wird. Dadurch wird der Kraftspeicher 41 bzw. die Tellerfeder gespannt. In der gespannten Position ist das Schnellschlussventil 21 geöffnet, der Hub weist seinen größten Betrag auf. Das freie Ende 44 des Kolbenhemdes 43 ist in der gespannten Position oberhalb der bezogen auf die Kopfseite des Gehäuseoberteils 22 ersten Blende 31 bzw. 34 angeordnet. Alle in Hochrichtung gesehen und beidseitig symmetrisch zueinander angeordneten Blenden 28, 29, 31, und 32, 33, 34 bzw. deren Mündungen sind frei, wenn das Schnellschlussventil 21 geöffnet ist.

Zum Schließen des Schnellschlussventils 21 wird das Hydrauliksystem auf Rücklauf gestellt. Dies kann mit geeigneten Reaktionsmitteln erfolgen. Bei der Schließbewegung des Schnellschlussventils 21 strömt das Hydrauliköl durch die Blenden 24; 28, 29, 31, und 32, 33, 34 aus dem Inneren des Gehäuseoberteils 22 heraus, wodurch der Überdruck abgebaut wird. Bei sehr kleinen Blendenbohrungen könnte die Integration der in der Zeichnungsebene jeweils untersten Blende 24 in ein Rückschlagventil vorgesehen werden. Gleichzeitig bewegt sich das Verschlusselement 26 mit seinem Kolbenhemd 43 bzw. seinem freien Ende 44 in Richtung zur Fußseite. Bei dieser in der Zeichnungsebene abwärts gerichteten Bewegung verdeckt das Kolbenhemd 43 zunächst die ersten Blende 31 und 34 gleichzeitig. Nacheinander werden die folgenden Blenden 29 und 33 bzw. 28 und 32 jeweils gleichzeitig verdeckt bzw. geschlossen. Der Hub wird kleiner (unterer Hubbereich), wobei der Hub bei geschlossenem Ventil einen Betrag von Null aufweist.

Durch das aufeinander folgende Schließen der Blenden verkleinert sich jeweils der effektiv freie Strömungsquerschnitt, so dass demzufolge die Fließgeschwindigkeit des Hydrauliköls und damit die Schließgeschwindigkeit des Schnellschlussventils 21, insbesondere im unteren Hubbereich des Verschlusselementes 26 verringert wird.

In bevorzugter Ausführung wird das Schnellschlussventil 21 bzw. sein Ventilantrieb 23 mit Hochdruckhydraulik (z.B. 160 bar) betrieben. Die Strömung in der jeweiligen Blende 24; 28, 29, 31, und 32, 33, 34 ist dabei lediglich vom Druck im Hydrauliköl abhängig. Eine Temperaturabhängigkeit (Veränderung der Viskosität) ist mittels der erfindungsgemäßen Verwendung der Blendenströmung weitgehend eliminiert, so dass das Schnellschlussventil 21 bei warmem oder kaltem Hydrauliköl annähernd gleich schnell schließt. Natürlich kann der Ventilantrieb auch mit Niederdruckhydraulik betrieben werden.

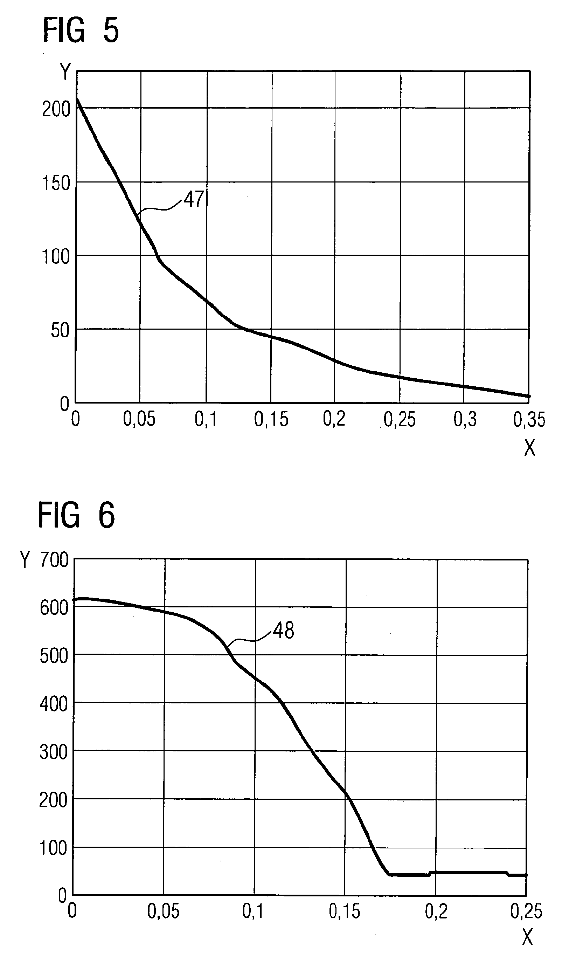

In Figur 5 ist die Schließgeschwindigkeit des mit dem erfindungsgemäßen Ventilantrieb 23 versehenen Schnellschlussventils 21 dargestellt. Erkennbar ist, dass die Schließkurve 47 im Gegensatz zum Stand der Technik nicht linear verläuft sondern quasi hyperbolisch abnimmt. Wie Figur 5 weiter zu entnehmen ist, verringert sich nur die Schließgeschwindigkeit im unteren Hubbereich des Verschlusselementes 26. Figur 6 zeigt den aufgrund der erfindungsgemäßen Ausführung resultierenden Verlauf des Massenstromes 48 (Massenstromcharakteristik), wobei eine an die Massenstromkurve 48 anzulegenden Tangente deutlich flacher verläuft als im Stand der Technik (siehe Figur 3). Ein ähnlich flacher Verlauf würde sich für einen linear schließenden Ventilantrieb (Figur 1) nur realisieren lassen wenn die Gesamtschließzeit erheblich vergrößert würde.

Durch die Anordnung von mehreren übereinander angeordneten Blenden bzw. Blendenpaaren 24; 28,31; 29,32; 31,34 kann die Charakteristik (Kontur) des Dampf-Massenstromes beeinflusst werden. Eine lineare Abnahme des Dampf-Massenstromes bewirkt eine konvexe Dampf-Massenstromkurve, deren Tangente immer steiler wird (Figuren 2 und 3). Mit mehreren erfindungsgemäßen Blendenpaaren dagegen wird eine konkave Schließkurve für den Ventilhub generiert (Figur 5). Dies sollte idealer Weise eine lineare Abnahme des Dampf-Massenstromes bewirken. Das ist im oberen Bereich Schließbereich natürlich aus geometrischen Gründen nicht zu realisieren, ist aber im unteren Bereich, der aufgrund der Gradienten ohnehin der kritische Bereich ist, sehr wohl realisierbar bzw. erfolgreich erreichbar (Figur 6, Massenstromverlauf 48).

## Patentansprüche

1. Schnellschlussventil,
das einen in einem Gehäuseoberteil (22) angeordneten Ventilantrieb (23) aufweist,
wobei in dem Gehäuseoberteil (22) eine Öffnung bzw. Blende (24) für ein Steuermedium eingebracht ist,
wobei der Ventilantrieb (23) ein Verschlusselement (26) aufweist, und
wobei in dem Gehäuseoberteil (22) eine in Hochrichtung zur Öffnung bzw. Blende (24) gesehen beabstandete Blende (28, 32) angeordnet ist,
**dadurch gekennzeichnet, dass**
das Gehäuseoberteil (22) in seinem Inneren eine zumindest im Bereich von zumindest einer Folge von zwei in Hochrichtung gesehen zur Öffnung bzw. Blende (24) beabstandeten Blenden (28, 32; 29, 31; 32,34) parallel zu seiner Mittelachse (X) geradlinig verlaufende Führungsfläche (36) für das Verschlusselement (26) mit einer entsprechend geradlinig verlaufenden Schließfläche (46) aufweist.

2. Schnellschlussventil nach Anspruch 1,
**dadurch gekennzeichnet, dass**
die zumindest zwei Blenden (28, 32; 29, 31; 32, 34) zumindest mit ihren Mündungsöffnungen im Längsschnitt gesehen jeweils diametral zu Mittelachse (X) diametral gegenüberliegend angeordnet sind.

3. Schnellschlussventil nach Anspruch 1 oder 2,
**dadurch gekennzeichnet, dass**
die Zumindest zwei Blenden (28, 32; 29, 31; 32, 34) im Längsschnitt gesehen an jeder sich gegenüberliegenden Seite des Gehäuseoberteils (22) angeordnet sind.

4. Schnellschlussventil nach einem der vorhergehenden Ansprüche,
**dadurch gekennzeichnet, dass**
das Verschlusselement (26) als geschlossener Zylinder ausgeführt ist.

5. Schnellschlussventil nach einem der vorhergehenden Ansprüche,
**dadurch gekennzeichnet, dass**
das Verschlusselement (26) als Vollzylinder oder als Hohlzylinder ausgeführt ist.

6. Schnellschlussventil nach einem der vorhergehenden Ansprüche,
**dadurch gekennzeichnet, dass**
das Verschlusselement (26) kolbenartig mit einem Kolbenboden (42) und einem Kolbenhemd (43) ausgeführt ist.

7. Schnellschlussventil nach einem der vorhergehenden Ansprüche,
**dadurch gekennzeichnet, dass**
das Verschlusselement (26) mit seiner Schließfläche (46) mit kleinem Spiel an der Führungsfläche (36) anliegt, wobei dem Verschlusselement (26) bevorzugt eine Dichtvorrichtung (58) zugeordnet ist.
